# EUROPÄISCHE PATENTANMELDUNG

(11) **EP 3 613 282 A1**
(43) Veröffentlichungstag der Anmeldung: **26.02.2020**
(21) Anmeldenummer: 19192240.0
(22) Anmeldetag: 19.08.2019
(51) Int. Cl.: A01K 13/00

(54) **BEINKLEID EINES VIERBEINIGEN TIERES**

(30) Priorität: 20.08.2018 DE 202018104758 U
(71) Anmelder: Busse Sportartikel GmbH & Co. KG, 49393 Lohne (DE)
(72) Erfinder: KÜHNEL, Marion, 31608 Marklohe (DE)
(74) Vertreter: Hoefer & Partner Patentanwälte mbB

(57) **Zusammenfassung**

Die Erfindung umfasst ein Beinkleid eines vierbeinigen Tieres (100), insbesondere eines Pferdes, zum Schutz vor Insekten und Sonne, wobei das Beinkleid (10) ausgebildet ist, ein Bein (101) des Tieres (100) lose einzuhüllen.

## Beschreibung

Die Erfindung betrifft ein Beinkleid eines vierbeinigen Tieres sowie einen Ganzkörperschutz des Tieres.

Zum Schutz von Pferden, Ponys oder körperlich vergleichbaren vierbeinigen Tieren sind Hauben/Kopfmasken und Decken mit und ohne Halsteil, beispielsweise Pferdedecken, bekannt, welche die Tiere vor Insekten und direkter Sonneneinstrahlung schützen. Solche Hauben und Decken sind in der Regel für Kopf, Hals und Rumpf des Tieres vorgesehen. Die Beine bleiben dabei ungeschützt. Teilweise übernehmen von der Pferdedecke lose herabhängende Fransen oder Kordeln im Bereich der Beine die Aufgabe, Insekten von den oberen Gliedmaßen zu verscheuchen.

Es ist Aufgabe der Erfindung ein Beinkleid zu schaffen, welches bei einfacher Handhabung und einfacher, kostengünstiger Herstellbarkeit einen umfassenden Schutz der Beine des Tieres vor Insekten und Sonneneinstrahlung gewährleistet.

Die Aufgabe wird durch ein Beinkleid mit den Merkmalen des Anspruchs 1 gelöst. Das erfindungsgemäße Beinkleid zeichnet sich dadurch aus, dass ein zuverlässiger Schutz der Beine des Tieres direktem Kontakt mit Insekten und Sonneneinstrahlung sichergestellt wird. Das Beinkleid ist dafür ausgebildet, ein Bein des Tieres lose einzuhüllen. Das heißt, um beispielsweise einen sicheren Schutz vor Insektenstichen zu bieten, liegt das Beinkleid nicht eng am Bein des Tieres an, sondern ist weit geschnitten, um das Bein lose einzuhüllen. Bevorzugt ist das Beinkleid dabei schlauchförmig ausgebildet und hüllt das Bein im Wesentlichen vollständig ein. Im Falle eines Pferdes, ist das Beinkleid beispielsweise so lang, dass dieses vom Huf bis ca. zum Ellenbogengelenk der Vorhand bzw. zum Kniegelenk der Hinterhand reicht. Das erfindungsgemäße Beinkleid bietet einen kostengünstigen und effektiven Schutz vor Insekten und Sonne. Dadurch dass insbesondere Insektenstiche und Insektenbisse an den Beinen des Tieres vermieden werden können, kann auch eine Verletzungsgefahr des Tieres, welche beispielsweise aus einem permanenten Abschlagen oder Abstreifen von Insekten mit einem Huf oder aus einem Abstampfen auf hartem Untergrund resultieren kann, verringert werden. Dadurch können nicht nur Unruhe, Nervosität oder Stress vermieden werden, sondern auch das Wohlbefinden des Tieres kann gesteigert werden. Insbesondere kann dadurch auch das Unfallrisiko von Personen, die mit der Pflege oder Behandlung eines Pferdes beschäftigt sind, reduziert werden.

Die Unteransprüche zeigen bevorzugte Weiterbildungen der Erfindung.

Bevorzugt weist das Beinkleid einen verschließbaren Längsschlitz auf. Dadurch kann das Beinkleid besonders einfach von einer Person an das Bein des Tieres angelegt werden.

Besonders bevorzugt umfasst das Beinkleid Mittel zum Öffnen und Schließen des Längsschlitzes.

Weiter bevorzugt umfassen die Mittel zum Öffnen und Schließen des Längsschlitzes einen Reißverschluss, einen Klettverschluss, einen Knopfverschluss, einen Druckknopfverschluss, oder einen Magnetverschluss.

Besonders vorteilhaft ist es, wenn sich der Längsschlitz über die gesamte Länge des Beinkleids erstreckt. Dabei kann mittels des Längsschutzes das Beinkleid vollständig über seine Längsseite geöffnet oder verschlossen werden. Dadurch kann das Beinkleid besonders einfach an das Bein des Tieres angelegt werden, ohne dass das Bein angehoben werden muss.

Weiterhin ist es vorteilhaft, wenn sich der Längsschlitz über eine Teillänge des Beinkleids erstreckt. Bevorzugt erstreckt sich der Längsschlitz über höchstens ¾ der gesamten Länge des Beinkleids. Das Beinkleid kann dadurch ebenfalls sehr einfach und an das Bein des Tieres angelegt werden.

Bevorzugt umfasst das Beinkleid ein Befestigungsmittel zum Befestigen des Beinkleids an einem Bein des Tieres.

Besonders bevorzugt umfasst das Befestigungsmittel einen Gummizugbund, einen Kordelzug, welcher insbesondere mit einem Stopper versehen ist, einen Klettverschluss, einen Druckknopfverschluss, oder einen Knopfverschluss. Besonders vorteilhaft ist es dabei, wenn das Befestigungsmittel an einem längsseitigen Ende des Beinkleids, insbesondere am oberen, dem Rumpf des Tieres zugewandten Ende, ausgebildet ist. Beispielsweise kann das Befestigungsmittel als ringförmiges Ende des schlauchförmigen Beinkleids ausgebildet sein, wobei der Querschnitt des Befestigungsmittels veränderbar ist, und wodurch das Beinkleid an dem Bein des Tieres befestigt werden kann. Möglich ist dabei auch, an beiden längsseitigen Enden des Beinkleids jeweils ein Befestigungsmittel vorzusehen, um eine besonders zuverlässige Befestigung zu ermöglichen und um ein Eindringen von Insekten in das Beinkleid zu verhindern.

Besonders günstig ist es, wenn eine Nutzlänge des Beinkleids mittels des Befestigungsmittels veränderbar ist. Beispielsweise kann dabei ein längsseitiges Ende des Beinkleids umgekrempelt werden und mittels des Befestigungsmittels fixiert werden. Als Nutzlänge wird dabei diejenige Länge des Beins des Tieres angesehen, welche von dem Beinkleid einzuhüllen ist.

Bevorzugt umfasst das Beinkleid einen Haltegurt. Der Haltegurt ist dabei eingerichtet, ein erstes Beinkleid und ein zweites Beinkleid lösbar miteinander zu verbinden. Der Haltegurt ist dabei über einen Rücken des Tieres legbar, um das erstes Beinkleid und das zweite Beinkleid an jeweils einem Bein des Tieres zu halten. Beispielsweise kann der Haltegurt jeweils mit dem ersten Beinkleid und mit dem zweiten Beinkleid mittels eines Verbindungselements verbindbar ausgestaltet sein. Möglich ist auch, dass der Haltegurt zweiteilig ausgebildet ist, wobei die zwei Teile des Haltegurts mittels eines weiteren Verbindungselements, beispielsweise mittels eines Gurtschlosses, verbindbar sind. Dabei ist es besonders günstig, wenn der Haltegurt in seiner Länge veränderbar ausgebildet ist, zur Anpassung an unterschiedlich große Tiere. Das erste Beinkleid kann dabei beispielsweise das linke vordere Bein des Tieres einhüllen, während das zweite Beinkleid das rechte vordere Bein des Tieres einhüllt. Der Haltegurt verbindet die zwei Beinkleider dabei, indem dieser über den Rücken des Pferdes verläuft. Ein Abrutschen der Beinkleider wird dabei durch den Haltegurt verhindert.

Besonders bevorzugt ist das Beinkleid aus einem atmungsaktiven Stoff und/oder einem Netzgewebe gebildet. Bevorzugt ist das Beinkleid aus einem oder mehreren der Materialien Polyamid, Polyester, Baumwolle, Polypropylen, Polyurethan, oder einem vergleichbaren Material gebildet. Dabei ist eine beliebige Kombination der Materialien möglich, beispielsweise indem verschiedene Bereiche des Beinkleids aus unterschiedlichen Materialien oder Materialgemischen gebildet sind. Ebenso können beliebige Bereiche des Beinkleids aus einem Netzgewebe und/oder aus einem vollflächigen atmungsaktiven Stoff gebildet sein.

Ferner betrifft die Erfindung einen Ganzkörperschutz eines vierbeinigen Tieres, insbesondere eines Pferdes, mit einer Decke und mit einem Beinkleid. Das Beinkleid ist dabei lösbar mit der Decke verbindbar. Die Decke ist bevorzugt eine Pferdedecke. Die Decke kann dabei den Rumpf des Tieres vor Insekten und Sonneneinstrahlung schützen. Bevorzugt ist für jedes Bein des Tieres ein Beinkleid vorgesehen, welches jeweils mit der Decke lösbar verbindbar ist. Durch den Ganzkörperschutz kann das Tier besonders günstig vor einem Kontakt mit Insekten und Sonne geschützt werden.

Bevorzugt umfasst der Ganzkörperschutz ferner ein Halsteil. Das Halsteil ist dabei lösbar mit der Decke verbindbar um den Hals und zumindest teilweise den Kopf des Tieres vor Insekten und Sonneneinstrahlung zu schützen. Besonders bevorzugt weist das Halsteil zusätzlich eine Haube auf, welche mit dem Halsteil lösbar verbindbar ist und welche einen noch größeren Teil des Kopfes des Tieres schützen kann.

Besonders bevorzugt umfasst der Ganzkörperschutz ein Verbindungsmittel, welches eingerichtet ist, die Decke und das Beinkleid lösbar miteinander zu verbinden. Sofern mehrere Beinkleider vorgesehen sind, ist für jedes Beinkleid jeweils ein Verbindungsmittel vorgesehen, mittels welchem das jeweilige Beinkleid mit der Decke lösbar verbindbar ist.

Besonders günstig ist es, wenn das Verbindungsmittel einen Reißverschluss, einen Klettverschluss, einen Knopfverschluss, einen Druckknopfverschluss, einen Magnetverschluss, einen Haken-Verschluss, oder einen Karabinerhaken-Verschluss umfasst. Dadurch ist es besonders einfach möglich, das Beinkleid mit der Decke zu verbinden und auch wieder zu lösen.

Weitere Einzelheiten, Vorteile und Merkmale der vorliegenden Erfindung ergeben sich aus nachfolgender Beschreibung von Ausführungsbeispielen anhand der Zeichnung. Es zeigt:
- Fig. 1: eine schematische Seitenansicht eines Pferde mit einem Ganzkörperschutz mit einem Beinkleid gemäß einem ersten Ausführungsbeispiel der Erfindung,
- Fig. 2: ein Detail des Ganzkörperschutzes der Fig.1,
- Fig. 3: eine schematische Seitenansicht eines Beinkleids gemäß einem zweiten Ausführungsbeispiel der Erfindung,
- Fig. 4: eine schematische Seitenansicht eines Beinkleids gemäß einem dritten Ausführungsbeispiel der Erfindung, und
- Fig. 5: eine schematische Ansicht eines Beinkleids gemäß einem vierten Ausführungsbeispiel der Erfindung.

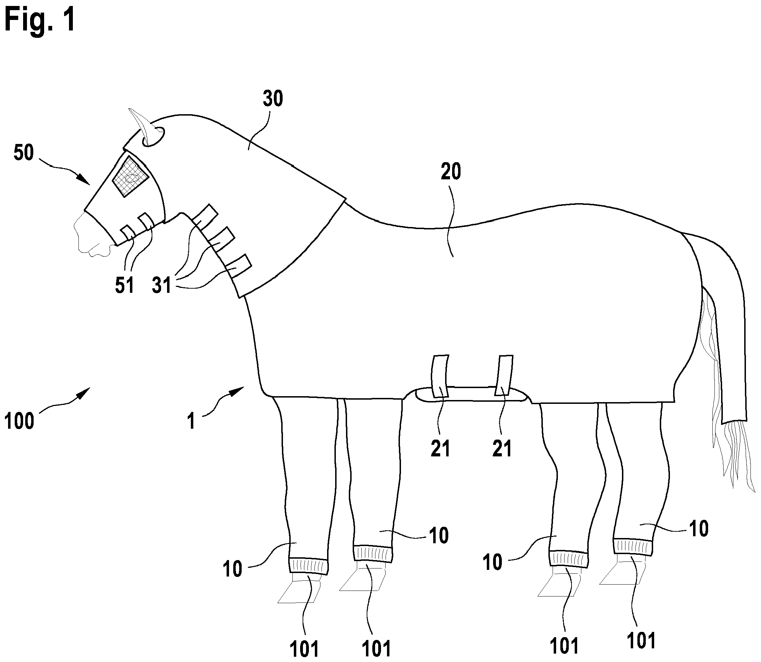

Die Fig. 1 zeigt ein Pferd 100 mit einem Ganzkörperschutz 1 in angelegtem Zustand. Der Ganzkörperschutz 1 umfasst ein Halsteil 30 mit einer Haube 50, welche den Hals und einen Teil des Kopfes des Pferdes 100 einhüllt, eine Pferdedecke 20, welche den Rumpf des Pferdes 100 einhüllt, und vier Beinkleider 10, welche jeweils ein Bein 101 des Pferdes 100 einhüllen. Durch den Ganzkörperschutz 1 ist das Pferd 100 im Wesentlichen vollständig vor einem direkten Kontakt mit Insekten oder Sonneneinstrahlung geschützt.

Die Pferdedecke 20 sowie Halsteil 30 und Haube 50 können mittels üblicher Befestigungsmöglichkeiten, wie beispielsweise Klettverschlüsse 21, 31, 51 oder Gurtschlösser oder dergleichen am Pferd 100 befestigt bzw. gehalten werden.

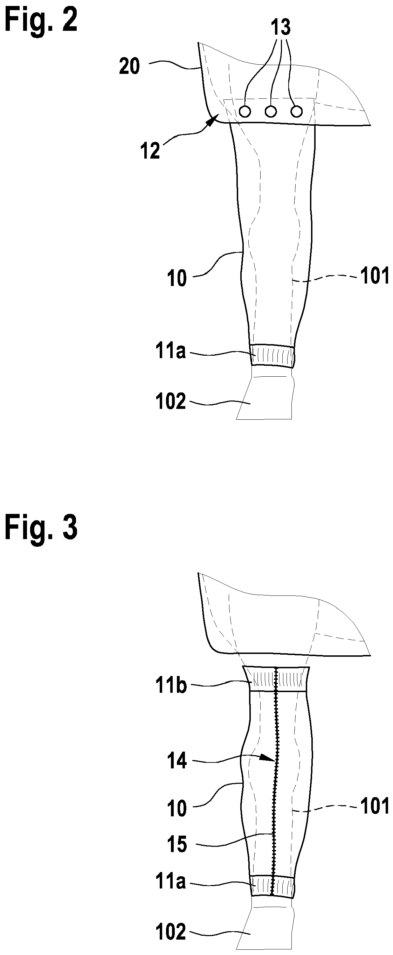

Das Beinkleid 10 ist im ersten Ausführungsbeispiel der Fig. 1 mit der Decke 20 mittels eines Verbindungsmittels 12 lösbar verbunden. Das Verbindungsmittel 12, wie auch weitere Details des Beinkleids 10, sind in der Fig. 2, welche ein Detail des Ganzkörperschutzes 1 der Fig. 1 zeigt, veranschaulicht. Das Verbindungsmittel 12 umfasst Knöpfe 13, welche das Beinkleid 10 und die Pferdedecke 20 lösbar miteinander verbinden.

Das Beinkleid 10 ist im ersten Ausführungsbeispiel in den Fig. 1 und 2 schlauchförmig ausgebildet und wird zum Anlegen über das Bein 101 übergezogen. An einem unteren Ende weist das Beinkleid 10 ein erstes Befestigungsmittel 11a auf, welches das Beinkleid 10 am Bein 101 befestigt. Das erste Befestigungsmittel 11a ist ein Gummizugbund, welcher das Beinkleid 10 durch eine elastische Zugkraft am Bein 101 festhält und damit ein Hochrutschen verhindert. Zudem liegt das erste Befestigungsmittel 11a eng an dem Bein 101 an und verhindert dadurch, dass Insekten in das Beinkleid 10 von unten eindringen können.

Fig. 3 zeigt ein Beinkleid 10 gemäß einem zweiten Ausführungsbeispiel der Erfindung. Im Unterschied zum ersten Ausführungsbeispiel in Fig. 1 und 2 ist das dritte Ausführungsbeispiel nicht mittels eines Verbindungsmittels 12 mit der Pferdedecke 20 verbunden, sondern weist an dessen oberen Ende, welches dem Rumpf des Pferdes 100 zugewandt ist, ein zweites Befestigungsmittel 11b auf, zur Befestigung an dem Bein 101. Durch die beiden Befestigungsmittel 11a, 11b, welche wie im ersten Ausführungsbeispiel beide als Gummizugbund ausgeführt sind, wird das Beinkleid 10 einfach und zuverlässig in Position gehalten und ein Eindringen von Insekten in das Beinkleid verhindert.

Das Beinkleid 10 des zweiten Ausführungsbeispiels weist einen Längsschlitz 14 auf, welcher sich über die gesamte Länge L1 des Beinkleids 10 erstreckt. Zudem weist das Beinkleid 10 Mittel 15 zum Öffnen und Schließen des Längsschlitzes 14 auf, welche im zweiten Ausführungsbeispiel als Reißverschluss ausgebildet sind. Dadurch kann das Beinkleid 10 vollständig geöffnet und anschließend besonders einfach um das Bein 101 des Pferdes 100 angelegt und geschlossen werden, ohne dass beispielsweise ein Anheben des Beins vom Boden notwendig ist.

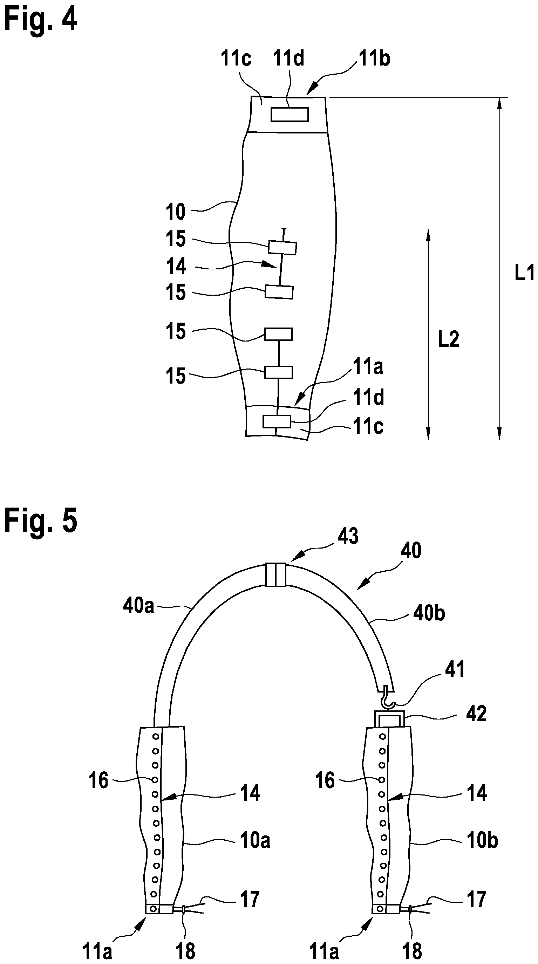

Fig. 4 zeigt ein Beinkleid 10 gemäß einem dritten Ausführungsbeispiel der Erfindung, wobei lediglich das Beinkleid 10 alleine dargestellt ist. Im Unterschied zum zweiten Ausführungsbeispiel weist das Beinkleid 10 des dritten Ausführungsbeispiels einen Längsschlitz 14 auf, welcher sich nicht über die gesamte Länge L1 des Beinkleids 10 erstreckt, sondern nur über eine Teillänge L2. Die Teillänge L2 ist dabei kürzer als ¾ der gesamten Länge L1. Dadurch muss das zweite Befestigungselement 11b sowie der Teilbereich des Beinkleids 10 oberhalb des Längsschlitzes 14 über den Huf 102 und das Bein 101 drüber gezogen werden, wobei durch den Längsschlitz 14 weiterhin ein sehr einfaches Anlegen des Beinkleids 10 ermöglicht wird. Die Mittel 15 zum Öffnen und Schließen des Längsschlitzes 14 sind im dritten Ausführungsbeispiel mehrere Klettverschlusselemente. Die Befestigungselemente 11a, 11b sind zudem Bünde 11c, welche mittels weiteren Klettverschlusselementen 11d in ihrem Querschnitt angepasst werden können, um das Beinkleid 10 am Bein 101 zu befestigen und ein Eindringen von Insekten in das Beinkleid verhindert.

Fig. 5 zeigt zwei Beinkleider 10a, 10b eines vierten Ausführungsbeispiels der Erfindung, wobei die beiden Beinkleider 10a, 10b mittels eines Haltegurts 40 lösbar miteinander verbindbar sind. Die Beinkleider 10a, 10b weisen wie im zweiten Ausführungsbeispiel der Fig. 3 jeweils einen Längsschlitz 14 auf, welcher sich jeweils über die gesamte Länge des Beinkleids 10a, 10b erstreckt. Im vierten Ausführungsbeispiel in der Fig. 5 weisen die Mittel 15 zum Öffnen und Schließen des Längsschlitzes 14 einen Knopfverschluss mit einer Vielzahl an Knöpfen 16 auf. Zudem ist ein alternatives Befestigungsmittel 11a vorgesehen. Hier können die Beinkleider 10a, 10b mittels eines Kordelzugs, welcher eine Kordel 17 und einen Stopper 18 aufweist, am Bein 101 befestigt werden.

Der Haltegurt 40 kann über den Rücken des Pferdes 100 gelegt werden, um die beiden Beinkleider 10a, 10b an jeweils einem Bein 101 zu halten. Im in der Fig. 5 gezeigten vierten Ausführungsbeispiel ist der Haltegurt 40 an einem Ende fest mit dem ersten Beinkleid 10a verbunden. Das andere Ende des Haltegurts 40 weist einen Haken 41 auf, welcher in eine Öse 42 eingreifen kann, welche am oberen Ende des zweiten Beinkleids 10b ausgebildet ist. Das zweite Beinkleid 10b kann somit an dem Haken 41 des Haltegurts 40 eingehängt werden. Durch den Haltegurt 40 ist, wie in der Fig. 5 gezeigt, an den oberen Bereichen der Beinkleider 10a, 10b kein Befestigungselement erforderlich, um die Beinkleider 10a, 10b in Position zu halten. Dennoch könnten auch hier zusätzlich an den oberen Bereichen der Beinkleider 10a, 10b Befestigungselemente vorgesehen sein, um die Befestigung der Beinkleider 10a, 10b weiter zu verbessern und ein Eindringen von Insekten in das Beinkleid verhindert.

Weiterhin weist der Haltegurt 40 ein Gurtschloss 43 auf, mittels welchem der Haltegurt 40 in zwei Teile 40a, 40b trennbar ist. Dadurch wird die Handhabung beim Anlegen und Befestigen der Beinkleider 10a, 10b weiter vereinfacht. Alternativ wäre auch möglich, dass der Haltegurt 40 einteilig und ohne Gurtschloss ausgebildet ist. Zudem wäre auch möglich, dass der Haltegurt 40 an seinen beiden Enden Mittel zum lösbaren Befestigen der Beinkleider 10a, 10b am Haltegurt 40 aufweist. Dabei wären auch andere Verbindungsmöglichkeiten, wie beispielsweise ein Klettverschluss, ein Reißverschluss, ein Knopfverschluss, ein Druckknopfverschluss, ein Magnetverschluss, oder ein Karabinerhaken-Verschluss möglich, um Haltegurt 40 und Beinkleider 10a, 10b miteinander zu verbinden.

Es sei angemerkt, dass die beschriebenen Ausführungsbeispiele, insbesondere im Hinblick auf die verschiedenen Befestigungs- oder Verbindungsvarianten, beliebig miteinander kombiniert werden können.

Neben der vorstehenden schriftlichen Beschreibung der Erfindung wird zu deren ergänzender Offenbarung hiermit explizit auf die zeichnerische Darstellung der Erfindung in den Fig. 1 bis 5 Bezug genommen.

### Bezugszeichenliste

- 1: Ganzkörperschutz
- 10: Beinkleid
- 11a, 11b: Befestigungsmittel
- 11c: Bund
- 12: Verbindungsmittel
- 13: Halte-Knöpfe
- 14: Längsschlitz
- 15: Mittel zum Schließen und Öffnen
- 16: Knöpfe
- 20: Pferdedecke
- 21: Klettverschlüsse
- 30: Halsteil
- 31: Klettverschlüsse
- 40: Haltegurt
- 41: Haken
- 42: Öse
- 43: Gurtschloss
- 50: Haube
- 51: Klettverschlüsse
- 100: Pferd
- 101: Bein
- 102: Huf

## Patentansprüche

1. Beinkleid eines vierbeinigen Tieres (100), insbesondere eines Pferdes, zum Schutz vor Insekten und Sonne, wobei das Beinkleid (10) ausgebildet ist, ein Bein (101) des Tieres (100) lose einzuhüllen.

2. Beinkleid nach Anspruch 1, wobei das Beinkleid (10) einen verschließbaren Längsschlitz (14) aufweist.

3. Beinkleid nach Anspruch 2, umfassend Mittel (15) zum Öffnen und Verschließen des Längsschlitzes (14).

4. Beinkleid nach Anspruch 3, wobei die Mittel (15) zum Öffnen und Verschließen des Längsschlitzes (14) einen Reißverschluss, einen Klettverschluss, einen Knopfverschluss, einen Druckknopfverschluss, oder einen Magnetverschluss umfassen.

5. Beinkleid nach einem der Ansprüche 2 bis 4, wobei der Längsschlitz (14) sich über eine gesamte Länge (L1) des Beinkleids (10) erstreckt, zum vollständigen längsseitigen Öffnen und Verschließen des Beinkleids (10).

6. Beinkleid nach einem der Ansprüche 2 bis 4, wobei der Längsschlitz (14) sich über eine Teillänge (L2) des Beinkleids (10), insbesondere über höchstens ¾ der gesamten Länge (L1) des Beinkleids (10), erstreckt.

7. Beinkleid nach einem der vorhergehenden Ansprüche, umfassend ein Befestigungsmittel (11), zum Befestigen des Beinkleids (10) an einem Bein (101) des Tieres (100).

8. Beinkleid nach Anspruch 7, wobei das Befestigungsmittel (11) einen Gummizugbund, einen Kordelzug, insbesondere mit Stopper, einen Klettverschluss, einen Druckknopfverschluss, oder einen Knopfverschluss umfasst.

9. Beinkleid nach Anspruch 7 oder 8, wobei eine Nutzlänge des Beinkleids (10) mittels des Befestigungsmittels (11) veränderbar ist.

10. Beinkleid nach einem der vorhergehenden Ansprüche, umfassend einen Haltegurt (40), wobei der Haltegurt (40) eingerichtet ist, jeweils zwei Beinkleider (10a, 10b) lösbar miteinander zu verbinden, und wobei der Haltegurt (40) über einen Rücken des Tieres (100) legbar ist, zum Halten der Beinkleider (10) an den Beinen (101) des Tieres(100).

11. Beinkleid nach einem der vorhergehenden Ansprüche, wobei das Beinkleid (10) aus einem atmungsaktiven Stoff und/oder einem Netzgewebe, insbesondere aus einem oder mehreren der Materialien Polyamid, Polyester, Baumwolle, Polypropylen, Polyurethan oder einem vergleichbaren Material, gebildet ist.

12. Ganzkörperschutz eines vierbeinigen Tieres, insbesondere eines Pferdes, umfassend eine Decke (20), insbesondere eine Pferdedecke, und ein mit der Decke (20) lösbar verbindbares Beinkleid (10) nach einem der vorhergehenden Ansprüche.

13. Ganzkörperschutz nach Anspruch 12, umfassend ein Halsteil (30), insbesondere mit einer Haube (50), wobei das Halsteil (30) lösbar mit der Decke (20) verbindbar ist.

14. Ganzkörperschutz nach Anspruch 12 oder 13, umfassend ein Verbindungsmittel (12), wobei das Verbindungsmittel (12) eingerichtet ist, die Decke (20) und das Beinkleid (10) lösbar miteinander zu verbinden.

15. Ganzkörperschutz nach Anspruch 14, wobei das Verbindungsmittel (12) einen Reißverschluss, einen Klettverschluss, einen Knopfverschluss, einen Druckknopfverschluss, einen Magnetverschluss, einen Haken-Verschluss, oder einen Karabinerhaken-Verschluss umfasst.
